# EUROPÄISCHE PATENTSCHRIFT

(11) **EP 4 035 867 B1**
(45) Veröffentlichungstag und Bekanntmachung des Hinweises auf die Patenterteilung: **22.01.2025**
(21) Anmeldenummer: 21154623.9
(22) Anmeldetag: 01.02.2021
(51) Int. Cl.: B29C 48/71, B29C 48/21, B29C 48/30, B29C 48/305, B29C 49/04

(54) **VERTEILERPLATTE, VERTEILER MIT EINER VERTEILERPLATTE, EXTRUSIONSANORDNUNG MIT EINEM VERTEILER UND VERFAHREN ZUM HERSTELLEN EINER VERTEILERPLATTE**
DISTRIBUTION PLATE, DISTRIBUTOR WITH A DISTRIBUTION PLATE, EXTRUSION DEVICE WITH A DISTRIBUTOR AND METHOD FOR PRODUCING A DISTRIBUTION PLATE
PLAQUE DE DISTRIBUTION, DISTRIBUTEUR DOTÉ D'UNE PLAQUE DE DISTRIBUTION, DISPOSITIF D'EXTRUSION POURVU D'UNE PLAQUE DE DISTRIBUTION ET PROCÉDÉ DE FABRICATION D'UNE PLAQUE DE DISTRIBUTION

(43) Veröffentlichungstag der Anmeldung: 03.08.2022
(73) Patentinhaber: W. Müller GmbH, 53842 Troisdorf (DE)
(72) Erfinder: WOLF, Thomas, 53840 Troisdorf (DE); MOSLER, Jürgen, 53819 Neunkirchen-Seelscheid (DE)
(74) Vertreter: Neumann Müller Oberwalleney Patentanwälte PartG mbB

(56) Entgegenhaltungen:
- WO-A1-2018/191787
- DE-A1- 102013 102 921
- DE-A1- 102020 212 987
- DE-B3- 102019 009 151
- US-A1- 2006 210 663
- US-A1- 2018 087 701
- US-B1- 6 572 803
- WORTBERG J: "NEUE WENDELVERTEILERWERKZEUGE. NEW SPIRAL MANDREL DIES", KUNSTSTOFFE, CARL HANSER VERLAG, MUNCHEN, DE, vol. 88, no. 2, 1 February 1998 (1998-02-01), pages 175/176, 178 - 180, XP000732884, ISSN: 0023-5563

## Beschreibung

Die vorliegende Erfindung betrifft eine Verteilerplatte für einen Verteiler zum Zuführen von thermoplastischer Kunststoffschmelze zu zumindest einem Extrusionskopf zum Herstellen eines insbesondere schlauchförmigen Vorformlings. Die Verteilerplatte umfasst eine erste Plattenseite und eine zweite Plattenseite, eine Verteilnut, die in die erste Plattenseite eingearbeitet ist und in einer Plattenebene der ersten Plattenseite verläuft, und zumindest einen sich an die Verteilnut anschließenden Anschlusskanal, der in die Verteilerplatte eingearbeitet ist und jeweils an einer Austrittsöffnung in der zweiten Plattenseite endet. Die vorliegende Erfindung betrifft weiterhin einen Verteiler mit zumindest einer Verteilerplatte. Ein solcher Verteiler kann auch als Schmelzeverteiler bezeichnet werden. Des Weiteren betrifft die vorliegende Erfindung eine Extrusionsanordnung mit dem Verteiler. Weiterhin betrifft die vorliegende Erfindung ein Verfahren zum Herstellen der Verteilerplatte.

Die US 3,561,0053 A offenbart einen Schmelzeverteiler mit zwei Verteilerplatten, die entlang einer Trennebene gegeneinander anliegen. In der Trennebene erstreckt sich ein Verteilnetz zum Verteilen thermoplastischer Kunststoffschmelze auf vier Masseausgänge, wobei die von einem Extruder geförderte Schmelze über einen zentralen Masseeingang in das Verteilnetz eingespeist wird. Das Verteilnetz weist Verteilkanäle auf, die in die einander zugewandten ersten Plattenseiten der Verteilerplatten eingearbeitet und von einem zentralen Hauptkanal gespeist sind. Die Verteilkanäle wiederum teilen sich jeweils in zwei Anschlusskanäle auf, die an je einem der Masseausgänge enden. Aufgrund der Ausbildung des Verteilnetzes ausschließlich in der Trennebene eignet sich der Verteiler, beziehungsweise die Verteilerplatten jedoch nur zum Herstellen von einschichtigen Vorformlingen.

Aus dem Stand der Technik sind weiterhin Schmelzeverteiler zum Herstellen von mehrschichtigen Vorformlingen bekannt. Derartige Verteiler weisen ein Plattenpaket mit mehreren Verteilerplatten auf, die jeweils entlang einer horizontalen Trennebene gegeneinander anliegen. In der jeweiligen Trennebene erstrecken sich Verteilkanäle, die in einander zugewandten Seiten der Verteilerplatten als Nuten eingearbeitet sind. An Enden der Verteilkanäle schließen sich senkrecht zur Trennebene gebohrte Zubeziehungsweise- Ablauflaufbohrungen an, die die Verteilkanäle mit Eintritts- beziehungsweise Austrittsöffnungen des Plattenpakets verbinden. Als nachteilig wird erachtet, dass an den Übergängen zwischen den Verteilkanälen und den Bohrungen Strömungstotzonen entstehen, in denen sich die Kunststoffschmelze stauen und erst nach einer gewissen, unter Umständen längeren Verweilzeit abfließen kann. Dies bereitet vor allem bei Farb- oder Materialwechseln Probleme, da sich dadurch die Umstellungsdauer und damit einhergehend der Ausschuss erhöht.

Die DE 10 2019 009 151 B3 offenbart einen Schmelzeverteiler aus einem einstückigen Bauteil. Der Schmelzeverteiler ist mit einem formlosen, additiven Fertigungsverfahren für metallische Werkstoffe hergestellt. Durch die 3D-Fertigung können die Übergänge zwischen Rohrleitungen, über die die Kunststoffschmelze den Austrittsöffnungen zugeführt wird, verrundet, sprich nicht geradlinig ausgebildet sein. Dadurch sollen Strömungstotzonen vermieden werden. Die additive Fertigung bietet eine große Geometriefreiheit. Allerdings wird als nachteilig empfunden, dass die Oberfläche der Rohrleitungen aufgrund des dem additiven Fertigungsverfahren immanenten schichtweisen Aufbaus gestuft, respektive rau ist, wodurch der Reinigungsaufwand des Schmelzeverteilers erhöht sein kann.

Die US 2006/210663 A1 zeigt ein Modul, das in einer modularen Blasfolien-Coextrusionsdüse zum Extrudieren von mehrschichtigen Polymermaterialien in Schlauchform verwendet wird. Das Modul beinhaltet einen oberen Flachabschnitt, der eine obere Schmelzeintrittsöffnung und in einer Fläche davon definierte Schmelzekanäle beinhaltet, wobei die Schmelzekanäle in Fluidverbindung mit der oberen Schmelzeeintrittsöffnung stehen. Das Modul weist ferner einen unteren Flachabschnitt auf, der eine untere Schmelzeeintrittsöffnung und in einer Fläche definierte Schmelzkanäle beinhaltet, wobei die Schmelzekanäle in Fluidverbindung mit der unteren Schmelzeeintrittsöffnung stehen. Die Schmelzekanäle des oberen und des unteren Flachabschnitts sind einander zugewandt und durch eine Trennplatte voneinander getrennt, so dass der obere Flachabschnitt zusammen mit einer Seite der Trennplatte einen oberen Schmelzepfad und der untere Flachabschnitt zusammen mit der anderen Seite einen unteren Schmelzepfad definieren. Die obere Schmelzeintrittsöffnung und die untere Schmelzeeintrittsöffnung sind über einen Teilerblock durch einen gemeinsamen Schmelzezuflusskanal gespeist.

Allgemeine Strömungsverteilungsanordnungen zum Verteilen von Fluiden sind in WO2018191787A1, US2018087701A1 und US6572803B1 gezeigt.

Eine Aufgabe der Erfindung besteht darin, eine Verteilerplatte bereitzustellen, bei der Strömungstotzonen vermieden werden und die einfach zu reinigen ist. Eine Aufgabe der Erfindung besteht weiterhin darin, einen Verteiler bereitzustellen, bei dem Strömungstotzonen vermieden werden und der einfach zu reinigen ist. Des Weiteren besteht eine Aufgabe der Erfindung darin, eine verbesserte Extrusionsanordnung bereitzustellen, bei der Strömungstotzonen vermieden werden und der einfach zu reinigen ist. Weiterhin besteht eine Aufgabe der Erfindung darin, ein Verfahren zum Herstellen einer Verteilerplatte bereitzustellen, bei der Strömungstotzonen vermieden werden und der einfach zu reinigen ist.

Eine Lösung besteht in einer Verteilerplatte der eingangs genannten Art, bei der der zumindest eine Anschlusskanal in die Verteilerplatte gefräst ist und in Strömungsrichtung einen zumindest abschnittsweise hin zur zweiten Plattenseite gekrümmten Verlauf aufweist.

Die Verteilnut und der zumindest eine Anschlusskanal sind von der thermoplastischen Kunststoffschmelze durchströmbar. Von Vorteil ist, dass der zumindest eine Anschlusskanal die im Betrieb von der Verteilnut in den zumindest einen Anschlusskanal einströmende thermoplastische Kunststoffschmelze hin zur jeweiligen Austrittsöffnung möglichst gleichmäßig und stufenlos umlenkt. Denn im Gegensatz zum Bohren, bei dem das Bohrwerkzeug nur in Richtung seiner Rotationsachse zerspant, kann beim Fräsen das Fräswerkzeug senkrecht oder schräg zu seiner Rotationsachse eingesetzt werden. Somit stellt der zumindest eine Anschlusskanal einen verrundeten Übergang von der in der Plattenebene der ersten Plattenseite verlaufenden Verteilnut und durch die Verteilerplatte hindurch bis hin zur Austrittsöffnung an der zweiten Plattenseite der Verteilerplatte bereit. Es werden Strömungstotzonen in der Schmelzeströmung vermieden und der Ausschuss bei Farb- oder Materialwechseln verringert. Zudem weisen gefräste Kanalwände eine durchgehend glatte Kanalwand auf, wodurch der Reinigungsaufwand der Verteilerplatte und damit einhergehend der Ausschuss weiter reduziert wird.

Im Weiteren wird der besseren Lesbarkeit halber "der zumindest eine Anschlusskanal" verkürzt als "der Anschlusskanal" bezeichnet, wobei auch weiterhin gelten soll, dass sich an die Verteilnut genau der eine Anschlusskanal oder mehrere der Anschlusskanäle, beispielsweise zwei, drei, vier, fünf oder sechs der Anschlusskanäle anschließen können. Jeder Anschlusskanal endet dabei an einer eigenen Austrittsöffnung, die in der zweiten Plattenseite der Verteilplatte ausgebildet ist, sodass die im Betrieb durch den zumindest einen Anschlusskanal strömende thermoplastische Kunststoffschmelze an der jeweiligen Austrittsöffnung aus der Verteilerplatte austreten kann.

Der Anschlusskanal kann eine Verlaufslinie definieren. Mit anderen Worten kann der Verlauf des Anschlusskanals, respektive der Kanalverlauf sich entlang der Verlaufslinie erstrecken. Insbesondere ist die Verlaufslinie eine zusammenhängende Linie, die gebogene, respektive gekrümmte und geradlinige Abschnitte aufweisen kann. Dadurch, dass sich der Anschlusskanal durch die Verteilerplatte hindurch erstreckt, kann er zumindest einen Abschnitt aufweisen, in dem der Anschlusskanal in Umfangsrichtung um die Verlaufslinie geschlossen ausgebildet ist.

Der Anschlusskanal kann einen Krümmungsabschnitt aufweisen, wobei die Verlaufslinie im Krümmungsabschnitt in Strömungsrichtung hin zur zweiten Plattenseite gekrümmt ausgebildet ist. Insbesondere ist die Verlaufslinie in dem Krümmungsabschnitt stetig gekrümmt und weist keinen wellenförmigen Verlauf auf. Die Krümmung ist an jedem Punkt im Krümmungsabschnitt ungleich Null. Dabei kann die Krümmung entlang der abschnittsweise gekrümmten Verlaufslinie variieren, jedoch nicht Null sein. Grundsätzlich kann die Krümmung an jedem Punkt im Krümmungsabschnitt auch gleich groß sein, wenn die Verlaufslinie einem Kreisbogenabschnitt folgt. In Idealisierung folgt die Verlaufslinie des Anschlusskanals im Krümmungsabschnitt einem Kreisbogenabschnitt. Wenn die zweite Plattenseite parallel zur ersten Plattenseite ausgerichtet ist, kann sich der Kreisbogenabschnitt über einen Winkel von 90 Grad, respektive einen Viertelkreis erstrecken.

Des Weiteren kann der Krümmungsabschnitt des zumindest einen Anschlusskanals eingangsseitig als eine senkrecht zur Verlaufslinie offene Nut und ausgangsseitig, respektive stromabwärts der Nut, als eine in Umfangsrichtung um die Verlaufslinie geschlossene Leitung ausgebildet sein. Gewissermaßen taucht der Anschlusskanal im Krümmungsabschnitt in die Verteilerplatte ab. Ein Nutboden entlang des nutenförmigen Teilabschnitts des Krümmungsabschnitts kann einen in Strömungsrichtung zumindest abschnittsweise hin zur zweiten Plattenseite insbesondere stetig gekrümmten Nutboden aufweisen.

Der als Nut ausgebildete Teilabschnitt des Krümmungsabschnitts, der zur Plattenebene der ersten Plattenseite hin offen gestaltet ist, vereinfacht das Herstellen der Verteilerplatte. Denn beim Einarbeiten des Anschlusskanals in die Verteilerplatte kann ein Spannschaft des Fräswerkzeuges je nach Ausrichtung zur Plattenebene an Kanten der Verteilerplatte anstoßen, wodurch ein weiteres, respektive tieferes Eintauchen in die Verteilerplatte gestört oder verhindert sein kann. Derartige Plattenkanten können auch als Störkanten bezeichnet werden.

Weiterhin kann vorgesehen sein, dass der zumindest eine Anschlusskanal stromaufwärtig vom Krümmungsabschnitt einen in der Plattenebene der ersten Plattenseite verlaufenden Eingangsabschnitt aufweist. Der Anschlusskanal kann somit unterbrechungsfrei, respektive stufenlos an die Verteilnut anschließen. Vorzugsweise schließt der Anschlusskanal unmittelbar an die Verteilnut an. Dadurch werden Strömungstotzonen vermieden. Die Verlaufslinie verläuft im Eingangsabschnitt parallel zur Plattenebene der ersten Plattenseite und hat im Krümmungsabschnitt den gekrümmten Verlauf. Der Anschlusskanal lenkt somit die im Betrieb durch die Verteilnut in den Anschlusskanal strömende thermoplastische Kunststoffschmelze aus der Plattenebene der ersten Plattenseite hin zur zweiten Plattenseite um, sodass die Kunststoffschmelze aus der Austrittsöffnung aus der Verteilerplatte austreten kann.

Der Eingangsabschnitt kann als eine zur Plattenebene der ersten Plattenseite offene Nut, respektive als eine senkrecht zur Verlaufslinie offene Nut ausgebildet sein, wodurch die Verteilerplatte einfacher herzustellen ist. Dadurch kann das Fräswerkzeug beim Herstellen des Anschlusskanals mit einem steileren Winkel zur Plattenebene an die Verteilerplatte geführt werden und tiefer in die Verteilerplatte eintauchen. Vorzugsweise entspricht die Tiefe des als Nut ausgebildeten Eingangsabschnitts der Tiefe der Verteilnut, um einen gleichmäßen, respektive stufenlosen Übergang von der Verteilnut in den Anschlusskanal zu gewährleisten. In bevorzugter Weise ist die Tiefe der Verteilnut über deren gesamten Verlauf gleichbleibend. Insbesondere kann die Verteilnut sich ausschließlich in der Plattenebene der ersten Plattenseite erstrecken.

Vorzugsweise ist der Anschlusskanal stromabwärtig des als Nut ausgebildeten Teilabschnitts des Krümmungsabschnitts in Umfangsrichtung um die Verlaufslinie geschlossen ausgebildet. Die Verlaufslinie kann im umfangsseitig geschlossenen Teilbereich des Anschlusskanals der Verlaufslinie des Anschlusskanals entsprechen. Vorzugsweise weist der Anschlusskanal im umfangsseitig geschlossenen Teilbereich eine elliptische, insbesondere kreisförmige Kontur auf. Die umfangsseitig geschlossenen Kanalwände des Anschlusskanals können konzentrisch zur Verlaufslinie angeordnet sein.

Um das Herstellen der Verteilerplatte, insbesondere das Fräsen des Anschlusskanals in das Werkstück, aus dem die Verteilerplatte hergestellt wird, weiter zu vereinfachen, kann es vorteilhaft sein, wenn eine im Krümmungsabschnitt an die Verlaufslinie angelegte Tangente mit der Plattenebene einen Winkel von größer als 0 Grad und kleiner als 60 Grad einschließt. Dies kann im Krümmungsabschnitt insbesondere für jeden Punkt auf der Verlaufslinie gelten.

Des Weiteren kann der Anschlusskanal stromabwärtig vom Krümmungsabschnitt einen weiteren Krümmungsabschnitt aufweisen, in dem die Verlaufslinie in Strömungsrichtung hin zur zweiten Plattenseite gekrümmt ist. In bevorzugter Weise ist der weitere Krümmungsabschnitt in Umfangsrichtung um die Verlaufslinie geschlossen ausgebildet. Eine im weiteren Krümmungsabschnitt an die Verlaufslinie angelegte Tangente kann mit der Plattenebene der ersten Plattenseite einen Winkel von maximal 90 Grad und größer als 30 Grad einschließen. Dies kann im weiteren Krümmungsabschnitt insbesondere für jeden Punkt auf der Verlaufslinie gelten.

Weiterhin kann zwischen dem ersten Krümmungsabschnitt und dem zweiten Krümmungsabschnitt ein Übergangsabschnitt ausgebildet sein, in dem die Verlaufslinie geradlinig ist. Der Anschlusskanal kann im Übergangsabschnitt zylindrisch ausgebildet sein. Die Verlaufslinie entlang des Übergangsabschnitts kann mit der Plattenebene einen Winkel von größer als 0 Grad und kleiner als 60 Grad einschließen.

Der Anschlusskanal kann einen an der Austrittsöffnung endenden Ausgangsabschnitt aufweisen, wobei die Verlaufslinie im Ausgangsabschnitt geradlinig sein kann und quer zur ersten Plattenseite verlaufen kann. In bevorzugter Weise ist der Ausgangsabschnitt in Umfangsrichtung um die Verlaufslinie geschlossen ausgebildet. Insbesondere kann eine gedachte Verlängerung der Verlaufslinie im Ausgangsabschnitt mit der Plattenebene der ersten Plattenseite einen Winkel von 45 Grad bis 90 Grad einschließen. Dadurch kann die Lage und Kontur der Austrittsöffnung in der zweiten Plattenseite an bauliche Vorgaben angepasst werden. Diese können sich beispielsweise dadurch ergeben, dass ein Verteiler, der die zumindest eine Verteilerplatte umfasst, mehrere übereinander liegende Platten aufweist, deren Kanäle untereinander verbunden werden müssen, und/oder dass der Verteiler in eine Extrusionsanordnung integriert werden muss, in der die räumliche Anordnung der flüssigkeitsleitenden Schnittstellen vorgegeben sind.

Gemäß einer Ausführungsform ist die Verlaufslinie im Ausgangsabschnitt geradlinig und kann senkrecht zur Plattenebene der ersten Plattenseite und/oder senkrecht zu einer Plattenebene der zweiten Plattenseite verlaufen. Die erste Plattenseite und die zweite Plattenseite können parallel zueinander sein. Somit kann der Anschlusskanal die über die Verteilnut in den Anschlusskanal strömende thermoplastische Kunststoffschmelze um 90 Grad umlenken. Der Anschlusskanal kann im Ausgangsabschnitt zylindrisch ausgebildet sein und die Austrittsöffnung kann kreisförmig ausgebildet sein. Wenn die Verteilerplatte nach dem Fräsen des Anschlusskanals nachbearbeitet werden soll, kann es von Vorteil sein, wenn sich der Ausgangsabschnitt, ausgehend von der Austrittsöffnung, respektive der zweiten Plattenseite bis zu 2,5 Millimeter in die Verteilerplatte hinein erstreckt. Vorzugsweise erstreckt sich der Ausgangsabschnitt maximal 2 Millimeter in die Verteilerplatte hinein. Die Nachbearbeitung kann beispielsweise ein Planfräsen oder Polieren der zweiten Plattenseite umfassen, wobei die Austrittsöffnung aufgrund des zylindrischen Ausgangsabschnitts weiterhin deren kreisförmige Kontur beibehält, solange noch ein Teilstück des Ausgangsabschnitts stehen bleibt.

Gemäß einer weiteren Ausführungsform kann der Ausgangsabschnitt des Anschlusskanals auch schräg zur zweiten Plattenseite in die Austrittsöffnung übergehen. Dies kann beispielsweise dann von Vorteil sein, wenn die Verteilerplatte zum Herstellen eines mehrschichtigen Vorformlings ausgebildet ist, um die Anschlüsse in dem begrenzten Bauraum anordnen zu können. Vorzugsweise ist die Verlaufslinie im Ausgangsabschnitt geradlinig. Insbesondere ist zwischen der Verlaufslinie im Ausgangsabschnitt und der Plattenebene der ersten Plattenseite ein Winkel von kleiner als 90 Grad und/oder größer als 0,5 Grad gebildet. Vorzugsweise beträgt dieser Winkel etwa 10 Grad bis 80 Grad. Die Austrittsöffnung kann die Form einer Ellipse oder auch eine Kreises, wenn die Austrittsöffnung schräg zur zweiten Plattenseite ausgerichtet ist, haben.

Weiterhin kann vorgesehen sein, dass der Anschlusskanal einen gleichbleibenden Strömungsquerschnitt aufweist. Insbesondere kann der Strömungsquerschnitt des Anschlusskanals entlang des umfangsseitig geschlossenen Leitungsabschnitts eine elliptische Fläche, respektive eine Kreisfläche sein.

Die Verteilerplatte kann eine zumindest in etwa quaderförmige Grundform aufweisen. Die erste Plattenseite und die zweite Plattenseite können voneinander abgewandte Außenseiten der Verteilerplatte sein. Die erste Plattenseite und die zweite Plattenseite können parallel zueinander sein. Dadurch kann die Verteilerplatte auf einfacher Weise mit weiteren Verteilerplatten oder anderen Platten eines Verteilers übereinander liegend angeordnet werden. Grundsätzlich kann die zweite Plattenseite aber auch winklig zur ersten Plattenseite angeordnet sein. Die erste Plattenseite kann, bei horizontaler Anordnung der Verteilerplatte, eine Oberseite und die zweite Plattenseite eine Unterseite der Verteilerplatte sein.

Vorzugsweise ist die Verteilerplatte aus einem insbesondere metallischen Vollmaterial hergestellt. Dadurch kann eine besonders stabile Verteilerplatte mit einer hohen Betriebslebenszeit. Die Verteilerplatte kann beispielsweise aus einem vergüteten Werkzeugstahl hergestellt sein. Die metallische Verteilerplatte ist gut fräsbar, sodass der Anschlusskanal mit einer besonders glatten Kanalwand bereitgestellt werden kann. Um eine vorgegebene Oberflächengüte für die Kanalwand zu erreichen, kann die Oberfläche des Anschlusskanals geschruppt oder geschlichtet, insbesondere fein geschlichtet sein. Vorzugsweise kann die Oberfläche der Kanalwand einen Mittenrauwert Rₐ von maximal 3,2 Mikrometer und weiter bevorzugt von etwa 1,6 Mikrometer aufweisen. Nach Fräsarbeiten kann die Kanalwand des Anschlusskanals poliert worden sein. Entsprechend kann der Mittenrauwert Rₐ der Oberfläche der Kanalwand maximal als 0,8 Mikrometer sein und kann vorzugsweise zwischen 0,4 Mikrometer und 0,025 Mikrometer liegen. Gute Ergebnisse wurden mit der Oberflächengüte erzielt, deren Mittenrauwert Rₐ zumindest in etwa 0,1 Mikrometer beträgt. Dadurch ist die Verteilerplatte einfacher zu reinigen und der Ausschuss wird verringert. Die Plattenstärke der Verteilerplatte kann beispielsweise zwischen 20 Millimeter und 100 Millimeter liegen. Vorzugsweise beträgt die Plattenstärke etwa 30 Millimeter bis 75 Millimeter.

In bevorzugter Weise schließen sich an die Verteilnut genau zwei der Anschlusskanäle an, in die sich der Verteilnut aufteilt, respektive verzweigt. Entsprechend können die beiden Anschlusskanäle auch als Abzweigkanäle bezeichnet werden. Vorzugsweise spreizen sich die Anschlusskanäle ausgehend von der Verteilnut hosenförmig voneinander ab. Durch die, in Strömungsrichtung, zumindest abschnittsweise hin zur zweiten Plattenseite gekrümmten Verlaufslinien der beiden Anschlusskanäle ergibt sich in etwa die Form einer sitzenden Hose. Dadurch, dass sich die Eingangsabschnitte der beiden Anschlusskanäle in der Plattenebene erstrecken können und zur ersten Plattenseite hin offen gestaltet sein können, ist der Übergang von der Verteilnut in die Eingangsabschnitte der beiden Anschlusskanäle mit dem Fräswerkzeug hindernisfrei zu erreichen. Der Übergang kann als symmetrische, insbesondere y-förmige Abzweigung in die Verteilerplatte gefräst sein. Die Abzweigung ist vorzugsweise verrundet ausgebildet. Auf diese Weise werden Strömungstotzonen im Übergang vermieden.

In ganz bevorzugter Weise weist die Verteilerplatte mehrere der Verteilnuten auf. Je Extrusionskopf kann die Verteilerplatte eine von der Verteilnut aufweisen, an die sich geanu einer oder zwei der Anschlusskanäle anschließen können. Bei exemplarisch zehn Extrusionsköpfen würde die Verteilerplatte entsprechend zehn der Verteilnuten aufweisen können. Grundsätzlich können aber auch mehrere der Verteilnuten einen der Extrusionsköpfe versorgen. Dies ist vor allem bei größeren Extrusionsköpfen von Vorteil. Beispielsweise können je Extrusionskopf zwei oder drei Verteilnuten vorgesehen sein, die sich wiederum in je einen, zwei, drei, vier, fünf oder sechs Anschlusskanäle verzweigen können.

Vorzugsweise gehören die auf der ersten Plattenseite eingearbeiteten Verteilnuten zu einem in sich zusammenhängenden Verteilnetz. Das Verteilnetz kann eingangsseitig einen Masseeingang zum Anschließen an einen Extruder aufweisen, um mittels der Verteilerplatte einen einschichtigen Vorformling extrudieren zu können. Um mittels der Verteilerplatte auch mehrschichtige Vorformlinge extrudieren zu können, kann sich über die Verteilerplatte ein in sich zusammenhängendes zweites Verteilnetz erstrecken, das unabhängig von dem ersten Verteilnetz besteht und keine flüssigkeitsleitende Verbindung zu diesem aufweist. Hierzu können beispielsweise in der zweiten Plattenseite weitere Verteilnute ausgebildet sein, an die sich wiederum Anschlusskanäle anschließen können, die in einer weiteren Verteilerplatte ausgebildet sein können. Die Verteilnuten in der ersten Plattenseite und die weiteren Verteilnuten in der zweiten Plattenseite können übereinander angeordnet sein. Die Eingangsbereiche der sich an die Verteilnuten anschließenden Anschlusskanäle können sich in der ersten Plattenseite weiter voneinander abspreizen als die Eingangsbereiche der sich an die weiteren Verteilnuten anschließenden weiteren Anschlusskanäle in der zweiten Plattenseite. Auf diese Weise kann eine besonders kompakt bauende Verteilerplatte bereitgestellt werden.

Die Aufgabe wird weiterhin gelöst durch einen Verteiler zum Zuführen von thermoplastischer Kunststoffschmelze zu zumindest einem Extrusionskopf zum Herstellen eines Vorformlings, wobei der Verteiler zumindest eine vorbeschriebene Verteilerplatte und eine Abdeckplatte umfasst. Durch den erfindungsgemäßen Verteiler ergeben sich dieselben Vorteile, wie sie im Zusammenhang mit der erfindungsgemäßen Verteilerplatte beschrieben worden sind, sodass hier abkürzend auf obige Beschreibung Bezug genommen wird. Dabei versteht es sich, dass alle genannten Ausgestaltungen der Verteilerplatte auf den Verteiler übertragbar sind und umgekehrt. Insgesamt ist der Verteiler einfacher zu reinigen und der Ausschuss nach einem Farb- oder Materialwechsel ist reduziert.

Vorzugsweise ist die zumindest eine Verteilerplatte und die Abdeckplatte zu einem Plattenpaket zusammengefasst, bei dem die Platten übereinander angeordnet sind. Die in der zumindest einen Verteilerplatte ausgebildeten Verteilnute kann durch die benachbarte Platte abgedeckt sein. Insbesondere ist die in die Verteilerplatte eingearbeitete Verteilnut durch eine in der benachbarten Platte eingearbeitete Verteilnut abgedeckt. Somit können die beiden übereinander angeordneten Verteilnuten gemeinsam einen Verteilkanal bilden. Der Verteilkanal kann eine Kanalmittelachse aufweisen, die bei symmetrischer Ausgestaltung der beiden übereinander liegenden Verteilnuten in der Trennebene zwischen den beiden Platten liegen kann. Der Verteilkanal erhält dadurch eine in Umfangsrichtung um die Kanalmittellinie des Verteilkanals geschlossene Kanalwand. Die beiden übereinander angeordneten Verteilnuten können im Querschnitt zur Kanalmittelachse gleich groß sein. Grundsätzlich kann die benachbarte Platte auch eine glatte, ebene Plattenseite aufweisen, sprich keine Verteilnut aufweisen, wodurch die Kanalmittelachse der Verteilnut nicht in der Trennebene, sondern in der Verteilnut der Verteilerplatte liegt.

Wenn der Verteiler zum Extrudieren eines einschichtigen Vorformlings ausgebildet ist, kann der Verteiler in einfachster Ausführungsform ein Plattenpaket mit zwei Platten, nämlich der Verteilerplatte und der Abdeckplatte, aufweisen, die entlang der Plattenebene, respektive der Trennebene gegeneinander anliegen können. Je Extrusionskopf kann der Verteiler einen Verteilkanal aufweisen, an den sich einer oder zwei der Anschlusskanäle anschließen können.

Der Verteiler kann ein Plattenpaket mit mehreren der Verteilerplatten aufweisen, die übereinander liegend angeordnet sein können. Die jeweils benachbarten Verteilerplatten können entlang der jeweiligen Plattenebene gegeneinander anliegen, wobei jeweils die zweite Plattenseite der einen Verteilerplatte mit der ersten Plattenseite der anderen Verteilerplatte in Anlage ist. Die Abdeckplatte kann das Plattenpaket insbesondere an einer von dem zumindest einen Extrusionskopf abgewandten Seite abschließen.

Mittels des Verteilers kann ein Vorformling mit zumindest einer Schicht extrudiert werden. Je Schicht kann der Verteiler ein zusammenhängendes Verteilnetz aufweisen, das einen Masseeingang für einen von einem Extruder geförderten Materialstrom aus thermoplastischer Kunststoffschmelze, je Extrusionskopf zumindest einen Masseausgang und in Fließrichtung des Materialstroms zwischen dem Masseeingang und den Masseausgängen je Extrusionskopf einen der Verteilkanäle aufweist. Am Beispiel eines Zweischichtextruders kann der Verteiler für die erste Schicht ein erstes Verteilnetz und für die zweite Schicht ein zweites Verteilnetz aufweisen, die unabhängig voneinander bestehen und nicht miteinander verbunden sind. Durch Anordnen mehrerer der Verteilerplatte übereinander können weitere Verteilnetze, insbesondere ein drittes, viertes, fünftes und/oder sechstes Verteilnetz aufgebaut werden, um mit dem zumindest einen Extrusionskopf entsprechend mehrschichtige, insbesondere bis zu sechsschichtige, Vorformlinge extrudieren zu können.

Die Aufgabe wird weiterhin gelöst durch eine Extrusionsanordnung mit einem vorbeschriebenen Verteiler und zumindest einem Extrusionskopf zum Herstellen eines Vorformlings. Durch die erfindungsgemäße Extrusionsanordnung ergeben sich dieselben Vorteile, wie sie im Zusammenhang mit dem erfindungsgemäßen Verteiler beschrieben worden sind, sodass hier abkürzend auf obige Beschreibung Bezug genommen wird. Dabei versteht es sich, dass alle genannten Ausgestaltungen des Verteilers auf die Extrusionsanordnung übertragbar sind und umgekehrt. Insgesamt ist die Extrusionsanordnung einfacher zu reinigen und der Ausschuss nach einem Farb- oder Materialwechsel ist reduziert.

Die Extrusionsanordnung kann zumindest einen Extruder umfassen, der stromaufwärtig vom Verteiler angeordnet ist. Zum Herstellen von mehrschichtigen Vorformlingen kann die Extrusionsanordnung je Schicht einen der Extruder aufweisen.

Die Aufgabe wird des Weiteren gelöst durch ein Verfahren zum Herstellen der vorbeschriebenen Verteilerplatte, wobei das Verfahren die Schritte umfasst: Einarbeiten der Verteilnut in eine erste Plattenseite eines Werkstücks, und Einarbeiten des zumindest einen Anschlusskanals in das Werkstück durch bahngesteuertes Formfräsen, wobei ein Fräskopf ausgehend von der ersten Plattenseite zumindest abschnittsweise auf einer hin zur zweiten Plattenseite gekrümmten Bahn verfahren wird. Durch das erfindungsgemäße Verfahren ergeben sich dieselben Vorteile, wie sie im Zusammenhang mit der erfindungsgemäßen Verteilerplatte beziehungsweise dem erfindungsgemäßen Verteiler beziehungsweise der erfindungsgemäßen Extrusionsanordnung beschrieben worden sind, sodass hier abkürzend auf obige Beschreibung Bezug genommen wird. Dabei versteht es sich, dass alle genannten Ausgestaltungen der Verteilerplatte beziehungsweise des Verteilers beziehungsweise der Extrusionsanordnung auf das Verfahren übertragbar sind und umgekehrt. Insgesamt ermöglicht das Verfahren das Herstellen einer Verteilerplatte, bei der Strömungstotzonen vermieden werden und die einfach zu reinigen ist.

Das Werkstück kann bereits die Grundform der fertigen Verteilerplatte aufweisen. Zum Herstellen der Verteilerplatte werden die Verteilnut und der zumindest eine Anschlusskanal in das Werkstück eingearbeitet. Aus der ersten Plattenseite beziehungsweise der zweiten Plattenseite des Werkstücks entsteht somit die erste Plattenseite beziehungsweise die zweiten Plattenseite der Verteilerplatte.

Das Fräswerkzeug kann einen herkömmlichen Fräser umfassen, der einen Grundkörper mit Spannschaft und Arbeitsbereich aufweist. Der Spannschaft wird in eine Aufnahme einer Spindel einer Werkzeugmaschine eingespannt. Die Spindel definiert eine Spindelachse, um die das Fräswerkzeug mit der Werkzeugmaschine drehend antreibbar ist. Mit dem Arbeitsbereich, respektive Fräskopf des Fräswerkzeugs kann das Werkstück einer Fräsbearbeitung unterzogen werden.

Der Fräskopf kann sphärisch ausgebildet sein. Vorzugsweise ist ein Durchmesser des Fräskopfs kleiner als ein Kanaldurchmesser des herzustellenden Anschlusskanals, sodass sich der Fräskopf selbst freischneiden kann. Dadurch kann ein gleichmäßig gekrümmter Anschlusskanal hergestellt werden. Um ein radiales Zustellen des Fräskopfes zu gewährleisten, kann die Fräsermittelpunktsbahn helixförmig sein. Durch die spiralförmige Bewegung wird ein Aufsetzen des Fräskopfs mit dessen Stirnseite auf das Werkstück vermieden. Wird der Fräser außerdem leicht angestellt, kann der Eintauchwinkel verändert werden.

Das bahngesteuerte Formfräsen kann ein trochoidales Fräsen beziehungsweise Taumel-Fräsen ist. Auf diese Weise kann der Fräskopf vorbei an Störkanten tiefer und mit einer größer gekrümmten Bahn in das Werkstück eintauchen. Zweckmäßigerweise taucht der Fräskopf beim Fräsen des Anschlusskanals entlang der zumindest abschnittsweise gekrümmten Verlaufslinie nicht senkrecht in das Werkstück ein. Vielmehr kann die Eintauchbewegung auf einer schrägen beziehungsweise flachen Bahn, bezogen auf die Plattenebene, erfolgen. Der Winkel zwischen der Spindelachse und der Plattenebene beziehungsweise der ersten oder zweiten Plattenseite kann zwischen 15 Grad und 165 Grad betragen.

Weiterhin kann ein erstes Teilstück des Anschlusskanals ausgehend von der ersten Plattenseite und ein zweites Teilstück des Anschlusskanals ausgehend von der zweiten Plattenseite in das Werkstück durch bahngesteuertes Formfräsen eingearbeitet werden. Dadurch kann gegebenenfalls ein Umspannen des Werkstücks notwendig sein, sodass die Verteilerplatte mitunter nicht in einer einzigen Aufspannung hergestellt werden kann. Jedoch können dadurch auch größere Plattenstärken bearbeitet werden, wodurch die Stabilität und Langlebigkeit der Verteilerplatte verbessert wird. Diese fertigungstechnische Unterteilung des Anschlusskanals in das erste Teilstück und das zweite Teilstück kann grundsätzlich auch bei dünneren Verteilerplatten von Vorteil sein. Das Umspannen des Werkstücks stellt vor allem aber dann keinen Nachteil im Herstellprozess dar, wenn auch in der zweiten Plattenseite der Verteilerplatte Verteilnuten für ein weiteres Verteilnetz eingearbeitet werden. Das erste Teilstück kann den Eingangsabschnitt und den (ersten) Krümmungsabschnitt umfassen. Das zweite Teilstück kann den weiteren, respektive zweiten Krümmungsabschnitt und den Ausgangsabschnitt umfassen. Die beiden Krümmungsabschnitte können unmittelbar aneinander grenzen, respektive ineinander übergehen. Wenn der Anschlusskanal den Übergangsabschnitt aufweist, kann dieser im ersten Teilstück und/oder im zweiten Teilstück des Anschlusskanals liegen.

Vorzugsweise wird für das bahngesteuerte Formfräsen eine CNC-gesteuerte Fräsmaschine verwendet werden. "CNC" steht für "Computerized Numerical Control". Die CNC-gesteuerte Fräsmaschine kann dabei nicht nur für den Anschlusskanal, sondern grundsätzlich auch für die übrigen Kanäle beziehungsweise Nuten in der Verteilerplatte verwendet werden. Bei der Bahnsteuerung werden mehrere Achsen gleichzeitig bewegt. Dabei wird das Fräswerkzeug mit vorgegebener Geschwindigkeit entlang einer programmierten Eingriffsbahn geführt. Hierzu kann die Fräsmaschine ein CNC-Bearbeitungszentrum sein, das die Bearbeitung in zumindest fünf Achsen ermöglicht. Dadurch kann die gekrümmte Geometrie des Anschlusskanals bei konstant genauer Maßeinhaltung in das Werkstück eingearbeitet werden.

Bevorzugte Ausführungsbeispiele der vorliegenden Erfindung werden in den Zeichnungen dargestellt und nachstehend beschrieben. Hierin zeigt:
- Figur 1: eine Verteilerplatte gemäß einer Ausführungsform der vorliegenden Erfindung in perspektivischer Draufsicht von schräg oben;
- Figur 2: die Verteilerplatte aus Figur 1 in perspektivischer Draufsicht von schräg oben, wobei verdeckte Körperkanten dargestellt sind;
- Figur 3: die Verteilerplatte aus Figur 1 in Schnittansicht entlang der in Figur 1 gezeigten Linie III-III;
- Figur 4: ein Teilschritt eines Verfahrens zum Herstellen der Verteilerplatte aus Figur 1 gemäß einer Ausführungsform der vorliegenden Erfindung, bei dem ein Fräswerkzeug einen Anschlusskanal in die Verteilerplatte einarbeitet;
- Figur 5: der Teilschritt aus Figur 4 in vergrößerter Teildarstellung, wobei zur Verdeutlichung der Relativbewegung zwischen dem Fräswerkzeug und der Verteilerplatte unterschiedliche Arbeitspositionen gezeigt sind;
- Figur 6: ein Verteiler gemäß einer Ausführungsform der vorliegenden Erfindung in perspektivischer Draufsicht von schräg oben, wobei verdeckte Körperkanten dargestellt sind;
- Figur 7: der Verteiler aus Figur 6 in Schnittansicht entlang der in Figur 6 gezeigten Linie VII-VII;
- Figur 8: der Verteiler aus Figur 6 in perspektivischer Draufsicht von schräg oben, wobei zur Verdeutlichung von sich über die Verteilerplatten erstreckenden Verteilnetze die Außenkanten der Verteilerplatten nicht dargestellt sind;
- Figur 9: die sich über die Verteilerplatten erstreckenden Verteilnetze aus Figur 8 in perspektivischer Ansicht von schräg unten;
- Figur 10: eine Extrusionsanordnung gemäß einer Ausführungsform der vorliegenden Erfindung in perspektivischer Ansicht von schräg unten; und
- Figur 11: die Extrusionsanordnung aus Figur 10 in Schnittansicht entlang der in Figur 10 gezeigten Linie XI-XI.

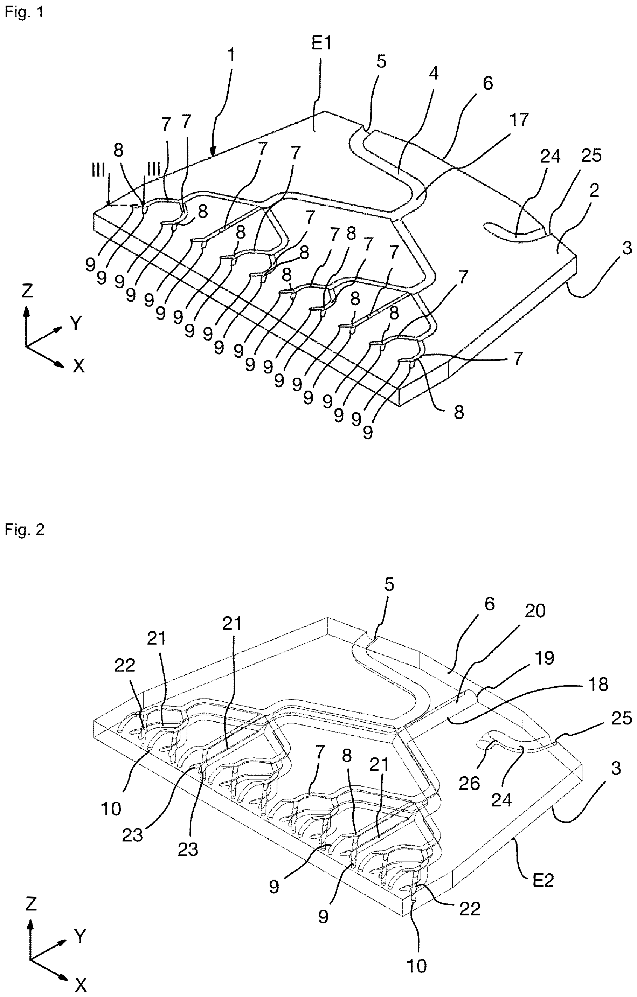

In den Figuren 1 bis 3 ist eine Verteilerplatte 1 für einen Verteiler zum Zuführen von thermoplastischer Kunststoffschmelze zu zumindest einem Extrusionskopf zum Herstellen eines Vorformlings für einen Schmelzeverteiler gemäß einer Ausführungsform gezeigt.

Zur Verdeutlichung der Ausrichtung der Verteilerplatte 1 im Raum sind im Sinne eines der Verteilerplatte 1 zugeordneten kartesischen Koordinatensystems Raumachsen X, Y, Z definiert und durch entsprechende Pfeile angegeben. Die Verteilerplatte 1 erstreckt sich mit deren Breite entlang einer Raumachse X, deren Tiefe entlang einer Raumachse Y und deren Höhe entlang einer Raumachse Z.

Die insbesondere metallische Verteilerplatte 1 kann eine zumindest in etwa quaderförmige Grundform aufweisen. Die Verteilerplatte 1 hat eine erste Plattenseite 2 und eine von der ersten Plattenseite 2 abgewandte zweite Plattenseite 3. Die beiden Plattenseiten 2, 3 definieren jeweils eine Plattenebene E1, E2, die parallel zueinander ausgerichtet sein können. Die Plattenebenen E1, E2 liegen parallel zu einer von den beiden Raumachsen X, Y aufgespannten Ebene.

In der Figur 1 ist gezeigt, dass in die erste Plattenseite 2 eine Eingangsnut 4 eingearbeitet, respektive gefräst ist, die von einer thermoplastischen Kunststoffschmelze in einer Strömungsrichtung durchströmbar ist. Die Eingangsnut 4 beginnt an einem ersten Masseeingang 5, an den ein erster Extruder anschließbar ist. Der Masseeingang 5 ist in einer Stirnseite 6 der Verteilerplatte 1 ausgebildet, die senkrecht zu den beiden Plattenseiten 2, 3 ausgerichtet sein kann. In Strömungsrichtung verzweigt sich die Eingangsnut 4 in der ersten Plattenebene E1 baumstrukturartig in mehrere, hier exemplarisch zehn, Verteilnuten 7, die in die erste Plattenseite 2 eingearbeitet, respektive gefräst sind. Die Verteilnuten 7 verzweigen sich jeweils an einer Abzweigstelle 8 in zwei Anschlusskanäle 9, die in die Verteilerplatte 1 gefräst sind. Die Anschlusskanäle 9 beginnen in der ersten Plattenebene E1 und enden jeweils an einer Austrittsöffnung 10, wobei die Austrittsöffnungen 10 in der zweiten Plattenseite 3 angeordnet sind.

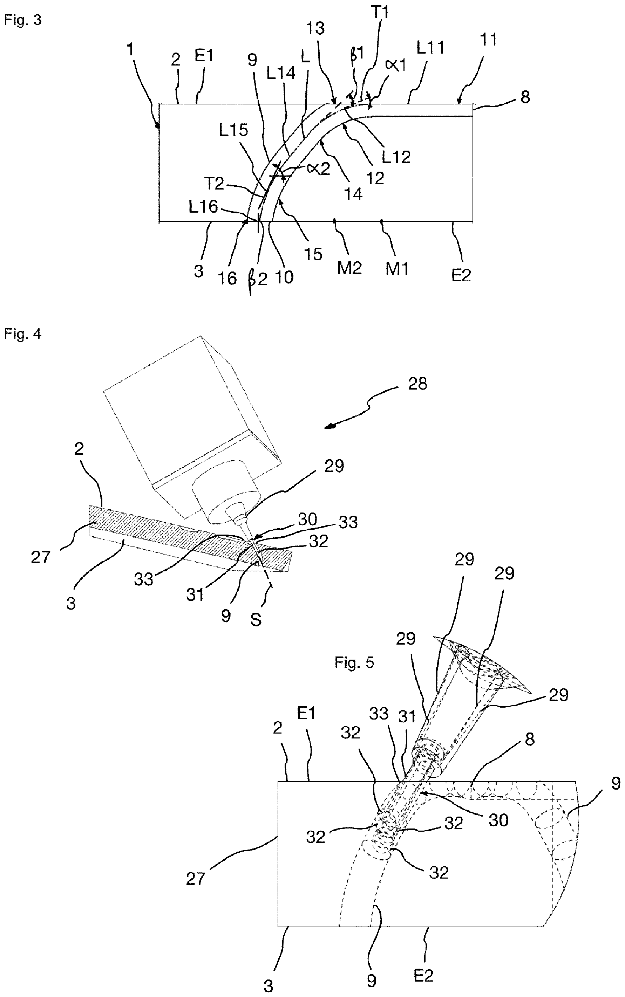

Die Anschlusskanäle 9 definieren jeweils eine Verlaufslinie L, die in Strömungsrichtung zumindest abschnittsweise hin zur zweiten Plattenseite 3 gekrümmt ausgebildet ist. In der Figur 3 ist der Verlauf eines der Anschlusskanäle 9 gezeigt, der exemplarisch für den Verlauf sämtlicher Anschlusskanäle 9 steht. Der Verlauf der Anschlusskanäle 9 wird nachstehend anhand der Figur 3 erläutert.

Der Anschlusskanal 9 weist einen Eingangsabschnitt 11 auf, in den die zugehörige Verteilnut 7 mündet. In der Figur 1 ist erkennbar, dass sich die Anschlusskanäle 9 jeweils paarweise ausgehend von der jeweiligen Abzweigstelle 8 in Strömungsrichtung voneinander abspreizen, sodass die Verlaufslinie L im Eingangsabschnitt 11 einen in der ersten Plattenebene E1 gebogenen Verlauf L11 aufweist. Der Eingangsabschnitt 11 ist als eine zur ersten Plattenebene E1, respektive senkrecht zur Verlaufslinie L11 offene Nut gestaltet. Die Nuttiefe des Eingangsabschnitts 11 entspricht der Nuttiefe der Verteilnut 7.

An den Eingangsabschnitt 11 schließt sich in Strömungsrichtung ein erster Krümmungsabschnitt 12 des Anschlusskanals 9 an, in dem die Verlaufslinie L aus der Plattenebene E1 heraus in Strömungsrichtung einen hin zur zweiten Plattenseite E2 stetig gekrümmten Verlauf L12 hat. Im ersten Krümmungsabschnitt 12 folgt die Verlaufslinie L zumindest in idealisierter Weise einem Kreisbogenabschnitt. Dieser kann, wie hier beispielhaft gezeigt ist, ein Achtelkreis sein, dessen Kreismittelpunkt M1 in der zweiten Plattenebene E2 liegt. Entsprechend kann eine im ersten Krümmungsabschnitt 12 an die Verlaufslinie L angelegte Tangente T1 mit der ersten Plattenebene E1 einen ersten Tangentenwinkel α1 von größer als 0 Grad und, hier exemplarisch, maximal 45 Grad einschließen. Dies gilt entlang des ersten Krümmungsabschnitts 12 für jeden Punkt auf dem Verlaufsabschnitt L12 der Verlaufslinie L. In der Figur 3 ist zudem erkennbar, dass ein eingangsseitiger Teilabschnitt 13 des ersten Krümmungsabschnitts 12 als eine zur ersten Plattenebene E1, respektive senkrecht zur Verlaufslinie L offene Nut gestaltet ist, die einen in Strömungsrichtung hin zur zweiten Plattenseite 3 gekrümmten Nutboden aufweist. Der nutenförmige Teilabschnitt 13 schließt sich unterbrechungsfrei an den nutenförmigen Eingangsabschnitt 11 an. Der eingangsseitige Teilabschnitt 13 erstreckt sich in Strömungsrichtung über zumindest in etwa die Hälfte des ersten Krümmungsabschnitts 12. Stromabwärtig vom eingangsseitigen Teilabschnitt 13 ist der Anschlusskanal 9 in Umfangsrichtung um die Verlaufslinie L durchgehend geschlossen, sprich in Form einer Leitung, ausgebildet.

An den ersten Krümmungsabschnitt 12 schließt sich in Strömungsrichtung ein Übergangsabschnitt 14 an, in dem die Verlaufslinie L einen geradlinigen Verlauf L14 hat. Der Übergangsabschnitt 14 kann auch als Zwischenabschnitt bezeichnet werden. Eine gedachte Verlängerung des im Übergangsabschnitt 14 geradlinig verlaufenden Abschnitts L14 der Verlaufslinie L schließt mit der ersten Plattenebene E1 einen ersten Winkel β1 ein. Der erste Winkel β1 beträgt, hier exemplarisch, 45 Grad.

An den Übergangsabschnitt 14 schließt sich in Strömungsrichtung ein zweiter Krümmungsabschnitt 15 an, in dem die Verlaufslinie L aus dem geradlinigen Verlauf L14 im Übergangsabschnitt 14 heraus in Strömungsrichtung einen hin zur zweiten Plattenseite E2 gekrümmten Verlauf L15 hat. In der Figur 3 ist gezeigt, dass die Verlaufslinie L im zweiten Krümmungsabschnitt 15 zumindest in idealisierter Weise einem Kreisbogenabschnitt folgt. Dieser kann, wie hier beispielhaft gezeigt ist, ein Achtelkreis sein, dessen Kreismittelpunkt M2 in der zweiten Plattenebene E2 liegt. Entsprechend kann eine im zweiten Krümmungsabschnitt 15 an die Verlaufslinie L angelegte Tangente T2 mit der ersten Plattenebene E1 einen zweiten Tangentenwinkel α2 von, hier exemplarisch, größer oder gleich 45 Grad und kleiner als 90 Grad einschließen. Dies gilt entlang des zweiten Krümmungsabschnitts 15 für jeden Punkt auf der Verlaufslinie L. Der Übersichtlichkeit halber ist zur Darstellung des zweiten Tangentenwinkels α2 eine Hilfslinie eingezeichnet, die parallel zur ersten Plattenebene E1 verläuft. Der zweite Kreismittelpunkt M2 liegt in der zweiten Plattenebene E2 zwischen dem ersten Kreismittelpunkt M1 und der Austrittsöffnung 10 des Anschlusskanals 9. Der Abstand zwischen den beiden Kreismittelpunkten M1, M2 entspricht zumindest in etwa der Erstreckung des Übergangsabschnitts 12 in Strömungsrichtung.

An den zweiten Krümmungsabschnitt 15 schließt sich in Strömungsrichtung ein Ausgangsabschnitt 16 des Anschlusskanals 9 an. Der Ausgangsabschnitt 16 endet an der Austrittsöffnung 10. Die Verlaufslinie L hat im Ausgangsabschnitt 16 wiederum einen geradlinigen Verlauf L16 und schließt mit der ersten Plattenebene E1 einen zweiten Winkel β2 von, hier exemplarisch, 90 Grad ein. Die Austrittsöffnung 10 ist entsprechend kreisförmig ausgebildet. Aufgrund der hier gezeigten infinitesimal kleinen Erstreckung des Ausgangsabschnitts 16 in Strömungsrichtung liegen die beiden Kreismittelpunkte M1, M2 in der zweiten Plattenebene E2. Vor allem wenn die zweite Plattenseite 3 mechanisch nachbearbeitet werden soll, kann es von Vorteil sein, wenn der Ausgangsabschnitt 16 eine größere geradlinige Erstreckung in Strömungsrichtung aufweist. Dann können die beiden Kreismittelpunkte M1, M2 um die Länge des Ausgangsabschnitts 16 aus der zweiten Plattenebene E2 hin zur ersten Plattenebene E1 versetzt angeordnet sein.

Der Verlauf der sich paarweise von der zugehörigen Verteilnut 7 abzweigenden Anschlusskanäle 9 ähnelt der Form einer sitzenden Hose, wie in der Figur 2 erkennbar ist, wodurch Strömungstotzonen vermieden werden. Grundsätzlich möglich ist aber auch, dass sich an die jeweilige Verteilnut 7 nur genau ein Anschlusskanal 9 anschließt, der dem in der Figur 3 gezeigten Verlauf entsprechen kann, wobei dann die Verlaufslinie L im Eingangsabschnitt 11 einen in der ersten Plattenebene E1 geradlinigen Verlauf haben kann, wodurch Strömungstotzonen vermieden werden.

Die in die erste Plattenseite 2 der Verteilerplatte 1 eingearbeiteten Nuten 4, 7 sowie die Anschlusskanäle 9 gehören zu einem in sich zusammenhängenden Verteilnetz 17, das eingangsseitig über den Masseeingang 5 mit einem Extruder verbindbar ist. Jede Verteilnut 7 versorgt über die, hier exemplarisch zwei, angeschlossenen Anschlusskanäle 9 einen Extrusionskopf mit einem Teilstrom der thermoplastischen Kunststoffschmelze. In der hier gezeigten Ausführungsform kann die Verteilerplatte 1 somit die im Betrieb über den ersten Masseeingang 5 einströmende thermoplastische Kunststoffschmelze auf zwanzig Stränge aufteilen, an die hier beispielhaft zehn Extrusionsköpfe versorgen können. Es versteht sich von selbst, dass die Verteilerplatte 1 auch weniger oder mehr als zehn der Verteilnuten 7, respektive weniger oder mehr als zwanzig der Anschlusskanäle 9 aufweisen kann.

In der Figur 2 ist erkennbar, dass in der zweiten Plattenseite 3 der Verteilerplatte 1 weitere Nuten eingearbeitet, respektive gefräst sind, die als Kanaloberteile die in eine erste Plattenseite 2 einer weiteren, darunter liegend anordbaren Verteilerplatte 1 ausgebildeten Nuten 4, 7 sowie die nutenförmigen Abschnitte 11, 13 der Anschlusskanäle 9 abdecken können. Die Rillen, die in Form von Nuten ausgebildet und zur zweiten Plattenebene E2 hin offen sind, können zu einem in sich zusammenhängenden, weiteren Verteilnetz 18 gehören, wobei das weitere Verteilnetz 18 unabhängig vom Verteilnetz 17 besteht und entsprechend räumlich von diesem getrennt ist. Um die Verteilerplatte 1 aufgrund baulich, räumlicher Rahmenbedingungen an stromaufwärtige Komponenten, wie Extruder, und stromabwärtige Komponenten, wie weitere Verteilerplatten oder Extrusionsköpfe, anschließen zu können, können die Verteilnetze 17, 18 vor allem im Bereich der Masseeingänge und im Bereich der Ausgangskanäle unterschiedlich angeordnet, respektive ausgerichtet sein.

Die Verteilerplatte 1 weist für das weitere Verteilnetz 18 einen eigenen Masseeingang 19 auf, der hier ebenfalls in der Stirnseite 6 der Verteilerplatte 1, benachbart zum Masseeingang 5, angeordnet sein kann. In die zweite Plattenseite 3 ist eine Eingangsnut 20 eingearbeitet, respektive gefräst, die von einer thermoplastischen Kunststoffschmelze in einer Strömungsrichtung durchströmbar ist. Die Eingangsnut 20 beginnt an dem weiteren Masseeingang 19, an den ein weiterer Extruder anschließbar ist. In Strömungsrichtung verzweigt sich die Eingangsnut 20 in der zweiten Plattenebene E2 baumstrukturartig in mehrere, hier exemplarisch zehn, Verteilnuten 21, die in die zweite Plattenseite 3 eingearbeitet, respektive gefräst sind. Die Verteilnuten 21 in der zweiten Plattenseite 3 und die Verteilnuten 7 in der ersten Plattensete 2 sind, hier exemplarisch, deckungsgleich.

Die Verteilnuten 21 verzweigen sich jeweils an einer Abzweigstelle 22 in zwei Anschlussnuten 23, die in die zweite Plattenseite 3 gefräst sind. Die Anschlussnuten 23 sind dazu ausgebildet, um den als Nut ausgebildeten Abschnitt der Verteilnuten 7 einer weiteren, darunter liegend anordbaren Verteilerplatte 1 zu überdecken. Das heißt, die Anschlussnuten 23 können von den Verteilnuten 7 den jeweiligen Eingangsabschnitt 11 und den eingangsseitigen Teilabschnitt 13 des ersten Krümmungsabschnitts 12 der in der ersten Plattenseite 2 der benachbarten Verteilerplatte 1 abdecken. In der Figur 2 ist erkennbar, dass sich die in die erste Plattenseite 2 eingearbeiteten nutenförmigen Abschnitte 11, 13 der Anschlusskanäle 9 weiter voneinander abspreizen als die in die zweite Plattenseite 3 eingearbeiteten Anschlussnuten 23, die die nutenförmigen Abschnitte 11, 13 einer darunter liegend anordbaren, weiteren Verteilerplatte 1 abdecken. In der Figur 2 sind aus Gründen der Übersichtlichkeit nur eine Teilmenge der Bezugszeichen 7, 8, 9, 10, 21, 22, 23 stellvertretend für die Gesamtmenge dieser Bezugszeichen eingezeichnet.

In den Figuren 1 und 2 ist weiterhin erkennbar, dass in die Verteilerplatte 1 ein Teilstück einer dritten Eingangsnut 24 eingearbeitet, respektive gefräst sein kann. Die Eingangsnut 24 beginnt, in Strömungsrichtung, an einem noch weiteren Masseeingang 25, der in der Stirnseite 6 der Verteilerplatte 1 angeordnet sein kann, und endet in der zweiten Plattenseite 3. Die Eingangsnut 24 kann in einer weiteren, darunter liegend anordbaren Verteilerplatte 1 weitergeführt sein. Über den noch weiteren Masseeingang 25 ist wiederum ein eigener Extruder anschließbar, sodass thermoplastische Kunststoffschmelze einem noch weiteren, hier dritten, Verteilnetz 26 zuführbar ist.

Zum Herstellen der Verteilerplatte 1 kann ein insbesondere metallisches Werkstück 27 bereitgestellt werden, das bereits die Grundform der Verteilerplatte 1 aufweisen kann. Das Werkstück 27 kann aus einem vergüteten Werkzeugstahl sein. Zum Einarbeiten der Nuten 4, 7, 20, 21, 23 und der Anschlusskanäle 9 in die Verteilerplatte 1 kann ein insbesondere 5-achsiges CNC-Bearbeitungszentrum 28, von dem in den Figuren 4 und 5 nur ein Teilausschnitt gezeigt ist, verwendet werden.

Das CNC-Bearbeitungszentrum 28 kann in an sich bekannter Weise einen Aggregateträger mit unter anderem einer Frässpindel 29 sowie einen (nicht gezeigten) Maschinentisch, auf dem das Werkstück 27 aufspannbar ist, aufweisen. Die Frässpindel 29 treibt ein Fräswerkzeug 30 um eine Spindelachse S rotierend an. Das Fräswerkzeug 30 weist einen Spannschaft 31 und einen Arbeitsbereich, respektive einen Fräskopf 32 auf. Der Spannschaft 31 kann in eine Aufnahme der Spindel 29 eingespannt sein. Mit dem Fräskopf 32 kann das Werkstück 27 einer Fräsbearbeitung unterzogen werden. Der Fräskopf 32 kann sphärisch ausgebildet sein. Ein Durchmesser des Fräskopfs 32 ist kleiner zu wählen als ein Kanaldurchmesser des herzustellenden Anschlusskanals 9, sodass sich der Fräskopf 32 selbst freischneiden kann.

Beim bahngesteuerten Formfräsen werden die Anschlusskanäle 9 mit gesteuerter Eingriffsbahn in das Werkstück 27 gefräst. Dabei werden die Frässpindel 29 mit dem Fräswerkzeug 30 sowie das auf dem Maschinentisch aufgespannte Werkstück 27 relativ zueinander bewegt, wie in der Figur 5 gezeigt ist. Darin ist eine relative Arbeitsposition des Fräswerkzeugs 30 und des Werkstücks 27 mit durchgezogenen Linien und drei weitere relative Arbeitsposition mit gestrichelten Linien dargestellt. Relativ zum Werkstück 27 fährt die Spindelachse S dabei die Mantelfläche eines Kegels ab, um an Störkanten 33 vorbei die gekrümmte Eingriffsbahn abfahren zu können. Um ein radiales Zustellen des Fräskopfes 32 zu gewährleisten, kann die Fräsermittelpunktsbahn helixförmig sein, wie in der Figur 5 gezeigt ist. Durch die spiralförmige Bewegung wird ein Aufsetzen des Fräskopfs 32 mit dessen Stirnseite auf das Werkstück 27 vermieden. Bei steiler Anstellung, wie in der Figur 3 mit der durchgezogenen Linie der Frässpindel 29 gezeigt, stößt das Fräswerkzeug 30 mit dem Spannschaft 31 an den Störkanten 33 an. Insofern kann kann zunächst ein erstes Teilstück des jeweiligen Anschlusskanals 9 von der ersten Plattenseite 2 ausgehend in das Werkstück 27 gefräst werden. Das erste Teilstück kann neben dem Eingangsabschnitt 11 und dem ersten Krümmungsabschnitt 12 auch einen Teilbereich des Übergangsabschnitts 14 umfassen.

Nachdem die Nuten 4, 7 und die ersten Teilstücke der Anschlusskanäle 9 ausgehend von der ersten Plattenseite 2 in die Verteilerplatte 1 gefräst wurden, kann die zweite Plattenseite 3 bearbeitet werden. Hierzu kann das Werkstück 27 auf dem Maschinentisch umgespannt werden. In analoger Weise können die Nuten 20, 21 und die zweiten Teilstücke der Anschlusskanäle 9 ausgehend von der zweiten Plattenseite 3 in die Verteilerplatte 1 eingearbeitet werden. Das zweite Teilstück des jeweiligen Anschlusskanals 9 kann neben dem Ausgangsabschnitt 16 und dem zweiten Krümmungsabschnitt 15 auch einen Teilbereich des Übergangsabschnitts 14 umfassen.

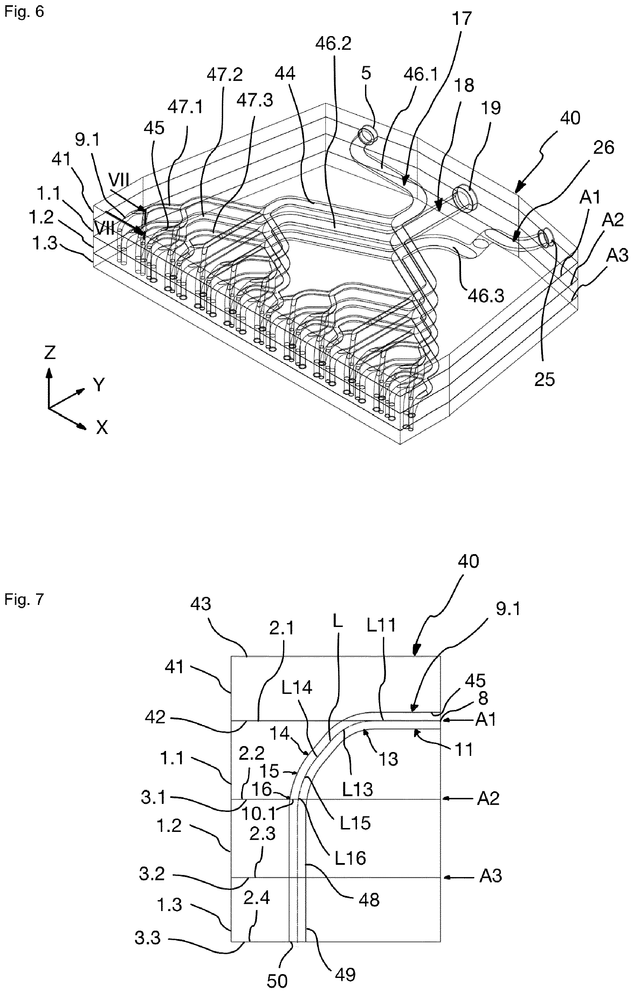

In den Figuren 6 bis 9 ist ein Verteiler 40 gemäß einer Ausführungsform gezeigt. Der Verteiler 40 ist zum Zuführen von thermoplastischer Kunststoffschmelze zu, hier exemplarisch zehn, Extrusionsköpfen zum Herstellen eines, hier exemplarisch dreischichtigen, Vorformlings ausgebildet.

Der Verteiler 40 umfasst ein Plattenpaket mit, hier exemplarisch vier, übereinander angeordneten Verteilerplatten, die jeweils entlang einer Trennebene A1, A2, A3 gegeneinander anliegen. Mit Blick auf die Figur 6 ist die oberste Platte eine Abdeckplatte 41, die auf einer innenliegenden Plattenseite 42 von der thermoplastischen Kunststoffschmelze durchströmbare Nuten aufweist. Eine außenliegende Plattenseite 43 ist eben, respektive glatt ausgebildet. Die Grundform der Abdeckplatte 41 entspricht derjenigen der drei Verteilerplatten 1. Unterhalb der Abdeckplatte 41 sind eine erste Verteilerplatte 1.1, eine zweite Verteilerplatte 1.2 und eine dritte Verteilerplatte 1.3 angeordnet. Die erste und zweite Verteilerplatte 1.1, 1.2 weisen sowohl auf deren ersten Plattenseite 2.1, 2.2 als auch auf deren zweiten Plattenseite 3.1, 3.2 die von der thermoplastischen Kunststoffschmelze durchströmbaren Nuten auf. Die Verteilerplatten 1.1 und 1.2 sind wie vorstehend beschrieben ausgebildet, sodass diesbezüglich auf die obige Beschreibung Bezug genommen wird. Dabei sind gleiche beziehungsweise abgewandelte Einzelheiten mit den gleichen Bezugszeichen versehen, wie in den Figuren 1 bis 5. Die dritte Verteilerplatte 1.3 schließt das Plattenpaket nach unten hin ab und weist entsprechend nur auf deren ersten Plattenseite 2.3 die von der thermoplastischen Kunststoffschmelze durchströmbaren Nuten auf. Insofern ist die dritte Verteilerplatte 1.3 wie vorstehend beschrieben ausgebildet, mit der Ausnahme, dass in der zweiten Plattenseite 3.3 keine von der thermoplastischen Kunststoffschmelze durchströmbaren Nuten ausgebildet sind.

Zur Verdeutlichung der Ausrichtung des Verteilers 40 im Raum sind im Sinne eines dem Verteiler 40 zugeordneten kartesischen Koordinatensystems Raumachsen X, Y, Z definiert und durch entsprechende Pfeile angegeben. Der Verteiler 40 erstreckt sich mit seiner Breite entlang einer Raumachse X, seiner Tiefe entlang einer Raumachse Y und seiner Höhe entlang einer Raumachse Z.

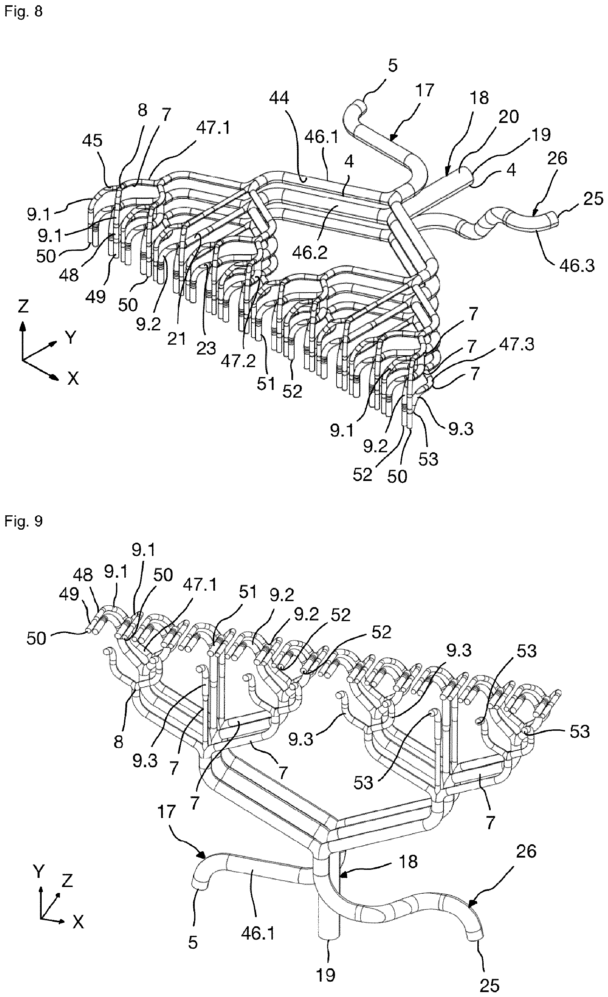

In die innenliegende Plattenseite 42 der Abdeckplatte 41 sind Nuten 44, 45 eingearbeitet, respektive gefräst, die sich mit den in der ersten Plattenseite 2.1 der ersten Verteilerplatte 1.1 eingearbeiteten Nuten 4, 7 sowie den eingearbeiteten nutenförmigen Abschnitte 11, 13 der Anschlusskanäle 9.1 decken. Die Nuten 44 der Abdeckplatte 41 und die Nuten 4, 7 der ersten Verteilerplatte 1.1 bilden somit zusammen einen umfangsseitig geschlossen Eingangskanal 46.1 und umfangsseitig geschlossene Verteilkanäle 47.1, wie insbesondere in den Figuren 8 und 9 gezeigt ist. Deren Kanalachsen, um die die Kanäle 46.1, 47.1 umfangsseitig geschlossen sind, verlaufen in der Trennebene A1. Der Eingangskanal 46.1 ist über den ersten Masseeingang 5 an den ersten Extruder anschließbar. An die Verteilkanäle 47.1 schließen sich jeweils zwei der Anschlusskanäle 9.1 an, die die durch die Verteilkanäle 47.1 strömbare thermoplastische Kunststoffschmelze aus der Trennebene A1 heraus um 90 Grad hin zur zweiten Trennebene A2 umlenken. Der Übersichtlichkeit halber sind in den Figuren 6 und 7 nur eine Teilmenge der Bezugszeichen dargestellt.

In der Figur 7 ist erkennbar, dass die jeweilige in der innenliegenden Plattenseite 42 der Abdeckplatte 41 eingearbeitete Nut 45 den nutenförmigen Abschnitt 11, 13 des jeweiligen Anschlusskanals 9.1 überdeckt. Entlang des nutenförmigen Eingangsabschnitts 11 des jeweiligen Anschlusskanals 9.1 verläuft die Nut 45 parallel zur Trennebene A1 und nähert sich entlang des nutenförmigen Teilabschnitts 13 in Strömungsrichtung bis an die erste Trennebene A1 stetig gekrümmt an. Der Krümmungsradius entspricht demjenigen der Verlaufslinie L im ersten Krümmungsabschnitt 12. Der nutenförmige Abschnitt 11, 13 des jeweiligen Anschlusskanals 9.1 ist somit durch die jeweilige Nut 45 in Umfangsrichtung um die Verlaufslinie L geschlossen ausgebildet. Die Verlaufslinie L des jeweiligen Anschlusskanals 9.1 verläuft somit im Eingangsabschnitt 11 in der Trennebene A1 (geradliniger Verlauf L11) und geht im ersten Krümmungsabschnitt 12 in den gekrümmten Verlauf L12 hin zur zweiten Trennebene A2 über. Nach einer 90 Grad-Umlenkung, die am Ende des zweiten Krümmungsabschnitts 15 erreicht ist, verläuft die Verlaufslinie L im Ausgangsabschnitt 16 senkrecht zu den Trennebenen A1, A2 (geradliniger Verlauf L16).

In den nachfolgenden Verteilerplatten 1.2, 1.3 sind fluchtend zu den Austrittsöffnungen 10.1 der ersten Verteilerplatte 1.1 Bohrungen 48, 49 ausgebildet, die senkrecht zu den Plattenseiten 2, 3 verlaufen. An den, hier exemplarisch zwanzig, Bohrungen 49 in der dritten Verteilerplatte 1.3 können die Extrusionsköpfe an den Verteiler 40 angeschlossen werden. Wenn jeder Extrusionskopf beispielsweise über zwei der Bohrungen 49 mit thermoplastischer Kunststoffschmelze versorgt werden soll, die paarweise zum Beispiel in eine Herzkurve des jeweiligen Extrusionskopfs münden können, können auf diese Weise zehn Extrusionsköpfe an das erste Verteilnetz 17 angebunden werden. Insbesondere in den Figuren 8 und 9 ist erkennbar, dass das erste Verteilnetz 17 in der ersten Trennebene A1 beginnt und sich vom ersten Masseeingang 5 über den Eingangskanal 46.1, die Verteilkanäle 47.1, die Anschlusskanäle 9.1 und die Bohrungen 48, 49 erstreckt und in zwanzig Anschlussstellen 50, die in der zweiten Plattenseite 3.3 der dritten Verteilerplatte 1.3 ausgebildet sind, endet. Das erste Verteilnetz 17 teilt somit die vom ersten Extruder förderbare thermoplastische Kunststoffschmelze in, hier exemplarisch, zwanzig gleichgroße Schmelzeströme auf, die, hier exemplarisch, zehn Extrusionsköpfen zugeführt werden können.

In analoger Weise sind zwischen der zweiten Plattenseite 3.1 der ersten Verteilerplatte 1.1 und der ersten Plattenseite 2.2 der zweiten Verteilerplatte 1.2 umfangsseitig geschlossene Kanäle 46.2, 47.2 gebildet, die sich in der Trennebene A2 erstrecken und stromabwärtig in die Anschlusskanäle 9.2 der zweiten Verteilerplatte 1.2 übergehen. In der nachfolgenden Verteilerplatten 1.3 sind fluchtend zu den Austrittsöffnungen 10.2 der zweiten Verteilerplatte 1.2 Bohrungen 51 ausgebildet, die senkrecht zu den Plattenseiten 2, 3 verlaufen. Insbesondere in den Figuren 8 und 9 ist erkennbar, dass das zweite Verteilnetz 18 in der zweiten Trennebene A2 beginnt und sich vom zweiten Masseeingang 19 über den Eingangskanal 46.2, die Verteilkanäle 47.2, die Anschlusskanäle 9.2 und die Bohrungen 51 erstreckt und in zwanzig Anschlussstellen 52 in der zweiten Plattenseite 3.3 der dritten Verteilerplatte 1.3 endet. Das zweite Verteilnetz 18 teilt somit die vom zweiten Extruder förderbare thermoplastische Kunststoffschmelze in, hier exemplarisch, zwanzig gleichgroße Schmelzeströme auf, die, hier exemplarisch, den zehn Extrusionsköpfen zugeführt werden können.

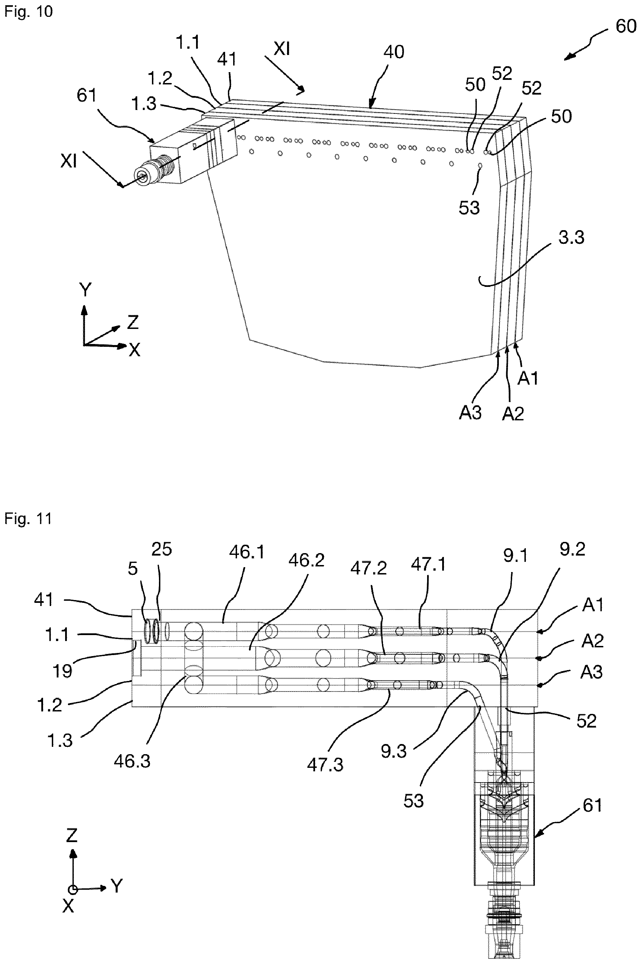

In analoger Weise sind zwischen der zweiten Plattenseite 3.2 der zweiten Verteilerplatte 1.2 und der ersten Plattenseite 2.3 der dritten Verteilerplatte 1.3 umfangsseitig geschlossene Kanäle 46.3, 47.3 gebildet, die sich in der dritten Trennebene A3 erstrecken und stromabwärtig in die Anschlusskanäle 9.3 der dritten Verteilerplatte 1.3 übergehen. Das dritte Verteilnetz 26 unterscheidet sich von den beiden anderen Verteilnetzen 17, 18, hier exemplarisch, dadurch, dass je Extrusionskopf ein Anschlusskanal 9.3 vorgesehen ist. In der Figur 9 ist erkennbar, dass sich hierzu vier der Verteilkanäle 47.3 in jeweils zwei der Anschlusskanäle 9.3 und zwei der Verteilkanäle 7.3 in jeweils genau einen der Anschlusskanäle 9.3 verzweigen. Entsprechend enden die Anschlusskanäle 9.3 in der zweiten Plattenseite 3.3 der dritten Verteilerplatte 1.3 an zehn Anschlussstellen 53. Die Anschlusskanäle 9.3 vollziehen zudem keine 90 Grad-Umlenkung, sondern eine Umlenkung von, hier, etwa 20 Grad aus der Trennebene A3 hin zur zweiten Plattenseite 3.3 der dritten Verteilerplatte 1.3. Grundsätzlich sind aber Umlenkungen durch die Anschlusskanäle 9.3 zwischen 1 Grad und 89 Grad denkbar und möglich. Auf diese Weise können die Schnittstellen der zehn Extruder für das dritte Verteilnetz 26 schräg zur zweiten Plattenebene E2 der dritten Verteilerplatte 1.3 an die Anschlussstellen 53 ansetzen, wie im Zusammenhang mit der erfindungsgemäßen Extrusionsanordnung in der Figur 11 gezeigt ist. In der Figur 9 ist erkennbar, dass die Anschlussstellen 50, 52 auf einer gedachten ersten Gerade angeordnet sind, wogegen die Anschlussstellen 53 beabstandet zur ersten Gerade auf einer gedachten zweiten Gerade, die parallel zur ersten Gerade ist, angeordnet sind.

Das dritte Verteilnetz 26 beginnt, hier exemplarisch, in der ersten Trennebene A1, in der der dritte Masseeingang 25 liegt. Dieser ist hier lediglich beispielhaft in der ersten Trennebene A1 angeordnet. Grundsätzlich kann zumindest einer der Masseeingänge 5, 17, 25 auch an anderer Stelle des Verteilers 40 angeordnet sein, wenn es die baulichen Vorgaben, Positionierung der Schnittstellen zu den Extrudern, respektive Platzverhältnisse der Extrusionsanordnung erfordern. Insbesondere in den Figuren 8 und 9 ist erkennbar, dass das dritte Verteilnetz 26 sich vom dritten Masseeingang 25 über den Eingangskanal 46.3, der sich hier durch die zweite Verteilerplatte 1.2 bis in die dritte Trennebene A3 erstreckt, die in der dritten Trennebene A3 verlaufenden Verteilkanäle 47.3, und die Anschlusskanäle 9.3 erstreckt und in den, hier, zehn Anschlussstellen 53 in der zweiten Plattenseite 3.2 der dritten Verteilerplatte 1.3 endet. Das dritte Verteilnetz 25 teilt somit die vom dritten Extruder förderbare thermoplastische Kunststoffschmelze in, hier exemplarisch, zehn gleichgroße Schmelzeströme auf, die, hier exemplarisch, den zehn Extrusionsköpfen zugeführt werden können.

Mittels des exemplarisch gezeigten Verteilers 40, der, hier, drei Verteilerplatten 1.1, 1.2, 1.3 und die Abdeckplatte 41 aufweist, können somit insgesamt zehn Extrusionsköpfe zum Herstellen von dreischichtigen Vorformlingen an den Verteiler 40 angeschlossen werden. Wenn die herzustellenden Vorformlinge mit mehr als drei Schichten extrudiert werden sollen, kann der Verteiler 40 um weitere Verteilerplatten 1 ergänzt werden. Ebenso kann der Verteiler 40 Vorformlinge mit zwei Schichten oder nur einer Schicht extrudieren, wofür der Verteiler 40 dann entsprechend nur zwei der Verteilerplatten 1 beziehungsweise nur eine der Verteilerplatten 1 sowie die Abdeckplatte 41 aufweist.

In den Figuren 10 und 11 ist eine Extrusionsanordnung 60 gemäß einer Ausführungsform gezeigt. Die Extrusionsanordnung 60 umfasst den Verteiler 40 sowie zehn Extrusionsköpfe 61. In der Figur 10 ist nur einer der Extrusionsköpfe 61 gezeigt, um die in der zweiten Plattenseite 3.3 der dritten Verteilerplatte 1.3 ausgebildeten Anschlussstellen 50, 52, 53 darstellen zu können. Jeder der Extrusionsköpfe 61 ist über zwei der Anschlussstellen 50 des ersten Verteilnetzes 17 an den (nicht gezeigten) ersten Extruder, über zwei der Anschlussstellen 52 des zweiten Verteilnetzes 18 an den (nicht gezeigten) zweiten Extruder und über eine der Anschlussstellen 53 des dritten Verteilnetzes 26 an den (nicht gezeigten) dritten Extruder anschließbar, um, hier, dreischichtige Vorformlinge extrudieren zu können.

Zur Verdeutlichung der Ausrichtung der Extrusionsanordnung 60 im Raum sind im Sinne eines der Extrusionsanordnung 60 zugeordneten kartesischen Koordinatensystems Raumachsen X, Y, Z definiert und durch entsprechende Pfeile angegeben. Die Extrusionsanordnung 60 erstreckt sich mit seiner Breite entlang einer Raumachse X, seiner Tiefe entlang einer Raumachse Y und seiner Höhe entlang einer Raumachse Z. In der Extrusionsanordnung 60 eingebaut sind die Trennebenen A1, A2, A3 zwischen den Verteilerplatten 1 vorzugsweise horizontal ausgerichtet.

### Bezugszeichenliste

- 1: Verteilerplatte
- 2: erste Plattenseite
- 3: zweite Plattenseite
- 4: Eingangsnut
- 5: Masseeingang
- 6: Stirnseite
- 7: Verteilnut
- 8: Abzweigstelle
- 9: Anschlusskanal
- 10: Austrittsöffnung
- 11: Eingangsabschnitt
- 12: Krümmungsabschnitt
- 13: Teilabschnitt
- 14: Übergangsabschnitt
- 15: Krümmungsabschnitt
- 16: Ausgangsabschnitt
- 17: Verteilnetz
- 18: Verteilnetz
- 19: Masseeingang
- 20: Eingangsnut
- 21: Verteilnut
- 22: Abzweigstelle
- 23: Anschlussnut
- 24: Eingangsnut
- 25: Masseeingang
- 26: Verteilnetz
- 27: Werkstück
- 28: Bearbeitungszentrum
- 29: Frässpindel
- 30: Fräswerkzeug
- 31: Spannschaft
- 32: Fräskopf
- 33: Störkante
- 40: Verteiler
- 41: Abdeckplatte
- 42: Plattenseite
- 43: Plattenseite
- 44: Nut
- 45: Nut
- 46: Eingangskanal
- 47: Verteilkanal
- 48: Bohrung
- 49: Bohrung
- 50: Anschlussstelle
- 51: Bohrung
- 52: Anschlussstelle
- 53: Anschlussstelle
- 60: Extrusionsanordnung
- 61: Extrusionskopf
- α, β: Winkel
- A: Trennebene
- E: Plattenebene
- L: Verlaufslinie
- M: Kreismittelpunkt
- S: Spindelachse
- T: Tangente
- X, Y, Z: Raumachsen

## Patentansprüche

1. Verteilerplatte (1) für einen Verteiler (40) zum Zuführen von thermoplastischer Kunststoffschmelze zu zumindest einem Extrusionskopf (61) zum Herstellen eines Vorformlings, wobei die Verteilerplatte (1) umfasst:
eine erste Plattenseite (2) und eine zweite Plattenseite (3),
eine Verteilnut (7), die in die erste Plattenseite (2) eingearbeitet ist und in einer Plattenebene (E1) der ersten Plattenseite (2) verläuft, und
zumindest einen sich an die Verteilnut (7) anschließenden Anschlusskanal (9), der in die Verteilerplatte (1) eingearbeitet ist und jeweils an einer Austrittsöffnung (10) in der zweiten Plattenseite (3) endet,
**dadurch gekennzeichnet, dass** der zumindest eine Anschlusskanal (9) in die Verteilerplatte (1) gefräst ist und in Strömungsrichtung einen zumindest abschnittsweise hin zur zweiten Plattenseite (3) gekrümmten Verlauf aufweist.

2. Verteilerplatte (1) nach Anspruch 1, **dadurch gekennzeichnet, dass** der zumindest eine Anschlusskanal (9) eine Verlaufslinie (L) definiert und einen Krümmungsabschnitt (12) aufweist, wobei die Verlaufslinie (L) im Krümmungsabschnitt (12) in Strömungsrichtung hin zur zweiten Plattenseite (3) gekrümmt ausgebildet ist.

3. Verteilerplatte (1) nach Anspruch 2, **dadurch gekennzeichnet, dass** der Krümmungsabschnitt (12) des zumindest einen Anschlusskanals (9) eingangsseitig als eine senkrecht zur Verlaufslinie (L) offene Nut und ausgangsseitig als eine in Umfangsrichtung um die Verlaufslinie (L) geschlossene Leitung ausgebildet ist.

4. Verteilerplatte (1) nach Anspruch 2 oder 3, **dadurch gekennzeichnet, dass** der zumindest eine Anschlusskanal (9) stromaufwärtig vom Krümmungsabschnitt (12) einen in der Plattenebene (E1) der ersten Plattenseite (2) verlaufenden Eingangsabschnitt (11) aufweist, wobei der Eingangsabschnitt (11) als eine zur Plattenebene (E2) der ersten Plattenseite (2) offene Nut ausgebildet ist.

5. Verteilerplatte (1) nach einem der Ansprüche 2 bis 4, **dadurch gekennzeichnet, dass** eine im Krümmungsabschnitt (12) an die Verlaufslinie (L) angelegte Tangente (T1) mit der Plattenebene (E1) der ersten Plattenseite (2) einen Winkel (α) von größer als 0 Grad und kleiner als 60 Grad einschließt.

6. Verteilerplatte (1) nach einem der Ansprüche 2 bis 5, **dadurch gekennzeichnet, dass** der zumindest eine Anschlusskanal (9) stromabwärtig vom Krümmungsabschnitt (12) einen weiteren Krümmungsabschnitt (15) aufweist, in dem die Verlaufslinie (L) in Strömungsrichtung hin zur zweiten Plattenseite (3) gekrümmt ist.

7. Verteilerplatte (1) nach Anspruch 6, **dadurch gekennzeichnet, dass** der zumindest eine Anschlusskanal (9) zwischen dem Krümmungsabschnitt (12) und dem weiteren Krümmungsabschnitt (15) einen Übergangsabschnitt (14) aufweist, in dem die Verlaufslinie (L) geradlinig ist.

8. Verteilerplatte (1) nach einem der Ansprüche 2 bis 7, **dadurch gekennzeichnet, dass** der zumindest eine Anschlusskanal (9) einen an der Austrittsöffnung (10) endenden Ausgangsabschnitt (16) aufweist, wobei die Verlaufslinie (L) im Ausgangsabschnitt (16) geradlinig ist und quer zur ersten Plattenseite (2) verläuft.

9. Verteilerplatte (1) nach einem der Ansprüche 1 bis 8, **dadurch gekennzeichnet, dass** die erste Plattenseite (2) und die zweite Plattenseite (3) voneinander abgewandte Außenseiten der Verteilerplatte (1) sind.

10. Verteilerplatte (1) nach einem der Ansprüche 1 bis 9, **dadurch gekennzeichnet, dass** sich die Verteilnut (7) in genau eine oder zwei der Anschlusskanäle (9) aufteilt.

11. Verteilerplatte (1) nach einem der Ansprüche 1 bis 10, **dadurch gekennzeichnet, dass** die Verteilerplatte (1) je Extrusionskopf (61) eine von der Verteilnut (7) aufweist.

12. Verteiler (40) zum Zuführen von thermoplastischer Kunststoffschmelze zu zumindest einem Extrusionskopf (61) zum Herstellen eines Vorformlings, wobei der Verteiler (40) zumindest eine Verteilerplatte (1) nach einem der Ansprüche 1 bis 11 und eine Abdeckplatte (41) umfasst.

13. Extrusionsanordnung (60) mit einem Verteiler (40) nach Anspruch 12 und zumindest einem Extrusionskopf (61) zum Herstellen eines Vorformlings.

14. Verfahren zum Herstellen einer Verteilerplatte (1) nach einem der Ansprüche 1 bis 11, wobei das Verfahren die Schritte umfasst:
- Einarbeiten einer Verteilnut (7) in eine erste Plattenseite (2) eines Werkstücks (27), und
- Einarbeiten zumindest eines Anschlusskanals (9) in das Werkstück (27) durch bahngesteuertes Formfräsen, wobei ein Fräskopf (32) ausgehend von der ersten Plattenseite (2) zumindest abschnittsweise auf einer hin zu einer zweiten Plattenseite (3) gekrümmten Bahn verfahren wird.

15. Verfahren nach Anspruch 14, **dadurch gekennzeichnet, dass** ein erstes Teilstück des zumindest einen Anschlusskanals (9) ausgehend von der ersten Plattenseite (2) und ein zweites Teilstück des zumindest einen Anschlusskanals (9) ausgehend von der zweiten Plattenseite (3) in das Werkstück (27) durch bahngesteuertes Formfräsen eingearbeitet wird.

## Claims

1. Manifold plate (1) for a manifold (40) for supplying thermoplastic plastic melt to at least one extrusion head (61) for producing a preform, the manifold plate (1) comprising:
a first plate side (2) and a second plate side (3),
a distribution groove (7) formed in the first plate side (2) and extending in a plate plane (E1) of the first plate side (2), and
at least one connecting channel (9) adjoining the distribution groove (7), said connecting channel is incorporated in the manifold plate (1) and ends at an outlet opening (10) in the second plate side (3),
**characterized in that** the at least one connecting channel (9) is milled into the manifold plate (1) and, in the flow direction, has a course which is curved at least partially towards the second plate side (3).

2. Manifold plate (1) according to claim 1, **characterized in that** the at least one connecting channel (9) defines a course line (L) and has a curved section (12), the course line (L) in the curved section (12) being curved in the flow direction towards the second plate side (3).

3. Manifold plate (1) according to claim 2, **characterized in that** the curved section (12) of the at least one connecting channel (9) is formed on an inlet side as a groove open perpendicular to the course line (L) and on an outlet side as a conduit closed in the circumferential direction around the course line (L).

4. Manifold plate (1) according to claim 2 or 3, **characterized in that** the at least one connecting channel (9) has, upstream of the curved section (12), an inlet section (11) extending in the plate plane (E1) of the first plate side (2), the inlet section (11) being designed as a groove open to the plate plane (E2) of the first plate side (2).

5. Manifold plate (1) according to any one of claims 2 to 4, **characterized in that** a tangent (T1) to the course line (L) in the curved section (12) encloses an angle (α) of greater than 0 degrees and less than 60 degrees with the plate plane (E1) of the first plate side (2).

6. Manifold plate (1) according to any one of claims 2 to 5, **characterized in that** the at least one connecting channel (9) has, downstream of the curved section (12), a further curved section (15) in which the course line (L) is curved in the flow direction towards the second plate side (3).

7. Manifold plate (1) according to claim 6, **characterized in that** the at least one connecting channel (9) has a transition section (14) between the curved section (12) and the further curved section (15), in which the course line (L) is straight.

8. Manifold plate (1) according to any one of claims 2 to 7, **characterized in that** the at least one connecting channel (9) has an outlet section (16) ending at the outlet opening (10), the course line (L) in the outlet section (16) being straight and extending transversely to the first plate side (2).

9. Manifold plate (1) according to any one of claims 1 to 8, **characterized in that** the first plate side (2) and the second plate side (3) are outer sides of the manifold plate (1) facing away from each other.

10. Manifold plate (1) according to any one of claims 1 to 9, **characterized in that** the distribution groove (7) divides into exactly one or two of the connecting channels (9).

11. Manifold plate (1) according to any one of claims 1 to 10, **characterized in that** the manifold plate (1) has one of the distribution grooves (7) per extrusion head (61).

12. Manifold (40) for supplying thermoplastic plastic melt to at least one extrusion head (61) for producing a preform, the manifold (40) comprising at least one manifold plate (1) according to any one of claims 1 to 11 and a cover plate (41).

13. Extrusion assembly (60) comprising a manifold (40) according to claim 12 and at least one extrusion head (61) for producing a preform.

14. Method of manufacturing a manifold plate (1) according to any one of claims 1 to 11, the method comprising the steps of:
- Working a distribution groove (7) in a first plate side (2) of a workpiece (27), and
- Working at least one connecting channel (9) into the workpiece (27) by path-controlled form milling, a milling head (32) being moved, starting from the first plate side (2), at least partially on a path curved towards a second plate side (3).

15. Method according to claim 14, **characterized in that** a first section of the at least one connecting channel (9) starting from the first plate side (2) and a second section of the at least one connecting channel (9) starting from the second plate side (3) are worked into the workpiece (27) by path-controlled form milling.

## Revendications

1. Plaque de distribution (1) pour un distributeur (40) pour acheminer de la matière thermoplastique en fusion vers au moins une tête d'extrusion (61) pour fabriquer une ébauche, sachant que la plaque de distribution (1) comprend :
un premier côté de plaque (2) et un deuxième côté de plaque (3),
une rainure de distribution (7), qui est réalisée dans le premier côté de plaque (2) et passe dans un plan de plaque (E1) du premier côté de plaque (2), et
au moins un conduit de jonction (9) se raccordant à la rainure de distribution (7), qui est réalisé dans la plaque de distribution (1) et se termine à chaque fois sur une ouverture de sortie (10) dans le deuxième côté de plaque (3),
**caractérisée en ce qu'**au moins un conduit de jonction (9) est fraisé dans la plaque de distribution (1) et comporte dans le sens d'écoulement au moins par section un tracé incurvé vers le deuxième côté de plaque (3).

2. Plaque de distribution (1) selon la revendication 1, **caractérisée en ce qu'**au moins un conduit de jonction(9) définit une ligne de passage (L) et comporte une section de courbure (12), sachant que la ligne de passage (L) est constituée incurvée dans la section de courbure (12) dans le sens d'écoulement par rapport au deuxième côté de plaque (3).

3. Plaque de distribution (1) selon la revendication 2, **caractérisée en ce que** la section de courbure (12) d'au moins un conduit de jonction (9) est constituée du côté entrée sous la forme d'une rainure ouverte perpendiculairement à la ligne de passage (L) et du côté sortie sous la forme d'une conduite fermée dans le sens périphérique autour de la ligne de passage (L).

4. Plaque de distribution (1) selon la revendication 2 ou 3, **caractérisée en ce qu'**au moins un conduit de jonction (9) comporte en amont de la section de courbure (12) une section d'entrée (11) passant dans le plan de plaque (E1) du premier côté de plaque (2), sachant que la section d'entrée (11) est constituée sous la forme d'une rainure ouverte vers le plan de plaque (E2) du premier côté de plaque (2).

5. Plaque de distribution (1) selon l'une quelconque des revendications 2 à 4, **caractérisée en ce qu'**une tangente (T1) avec le plan de plaque (E1) du premier côté de plaque (2) appliquée à la ligne de passage (L) dans la section de courbure (12) forme un angle (α) supérieur à 0 degré et inférieur à 60 degrés.

6. Plaque de distribution (1) selon l'une quelconque des revendications 2 à 5, **caractérisée en ce qu'**au moins un conduit de jonction (9) comporte en aval de la section de courbure (12) une autre section de courbure (15) dans laquelle la ligne de passage (L) est incurvée dans le sens d'écoulement par rapport au deuxième côté de plaque (3).

7. Plaque de distribution (1) selon la revendication 6, **caractérisée en ce que** au moins un conduit de jonction (9) comporte entre la section de courbure (12) et l'autre section de courbure (15) une section de transfert (14) dans laquelle la ligne de passage (L) est rectiligne.

8. Plaque de distribution (1) selon l'une quelconque des revendications 2 à 7, **caractérisée en ce qu'**au moins un conduit de jonction (9) comporte une section de sortie (16) finissant sur l'ouverture de sortie (10), sachant que la ligne de passage (L) est rectiligne dans la section de sortie (16) et passe transversalement au premier côté de plaque (2).

9. Plaque de distribution (1) selon l'une quelconque des revendications 1 à 8, **caractérisée en ce que** le premier côté de plaque (2) et le deuxième côté de plaque (3) sont des côtés extérieurs de la plaque de distribution (1) éloignés l'un de l'autre.

10. Plaque de distribution (1) selon l'une quelconque des revendications 1 à 9, **caractérisée en ce que** la rainure de distribution (7) se répartit en exactement un ou deux conduits de raccord (9).

11. Plaque de distribution (1) selon l'une quelconque des revendications 1 à 10, **caractérisée en ce que** la plaque de distribution (1) comporte respectivement une tête d'extrusion (61) par rainure de distribution (7).

12. Distributeur (40) pour acheminer de la matière thermoplastique en fusion vers au moins une tête d'extrusion (61) pour fabriquer une ébauche, sachant que le distributeur (40) comprend au moins une plaque de distribution (1) selon l'une quelconque des revendications 1 à 11 et une plaque de couverture (41).

13. Dispositif d'extrusion (60) avec un distributeur (40) selon la revendication 12 et au moins une tête d'extrusion (61) pour la fabrication d'une ébauche.

14. Procédé de fabrication d'une plaque de distribution (1) selon l'une quelconque des revendications 1 à 11, sachant que le procédé comprend les étapes de :
- réalisation d'une rainure de distribution (7) dans un premier côté de plaque (2) d'une pièce (27), et
- réalisation d'au moins un conduit de jonction (9) dans la pièce (27) par fraisage de forme à trajectoire contrôlée, sachant qu'une tête de fraisage (32) est déplacée en partant du premier côté de plaque (2) au moins par section sur une trajectoire courbe vers un deuxième côté de plaque (3).

15. Procédé selon la revendication 14, **caractérisé en ce qu'**un premier élément de pièce d'au moins un premier conduit de jonction (9) est réalisé dans la pièce (27) par fraisage de forme à trajectoire contrôlée en partant du premier côté de plaque (2) et un deuxième élément de pièce d'au moins un conduit de jonction (9) est réalisé en partant du deuxième côté de plaque (3).
